Europäisches Patentamt

European Patent Office

Office européen des brevets

(11) Publication number: **0 252 693**
**A1**

## (12) EUROPEAN PATENT APPLICATION

(21) Application number: 87305908.3

(51) Int. Cl.4: **H02H 3/33**

(22) Date of filing: 03.07.87

(30) Priority: **10.07.86 GB 8616833**

(43) Date of publication of application:
**13.01.88 Bulletin 88/02**

(84) Designated Contracting States:
**AT DE FR GB**

(71) Applicant: **DELTA ELECTRICAL (HOLDINGS) LIMITED**
**1 Kingsway**
**London WC2B 6XF(GB)**

(72) Inventor: **Horton, Henry Charles**
**Glasfryn Ravenspoint Road Treaddur Bay**
**Holyhead Gwynedd LL65 2YU Wales(GB)**

(74) Representative: **Kirk, Geoffrey Thomas et al**
**BATCHELLOR, KIRK & EYLES 2 Pear Tree**
**Court Farringdon Road**
**London EC1R 0DS(GB)**

(54) Earth leakage protective circuit.

(57) An earth leakage protective circuit has a contact breaker (CB) with its contacts in a supply line. A switching device (CSR1) is connected with the coil of the contact breaker to provide, when operated, a path for current through the coil. A circuit for detecting earth leakage and for controlling the switching device to cause the contacts to open when earth leakage occurs has a sensing circuit (CT1) for sensing an imbalance in current flow in the circuit to be protected to provide an imbalance output signal, and an error condition determining circuit (IC1a, b etc.), which is connected connected to receive the imbalance output signal, and to produce an output control signal for operating the switching device (CSR1) when the the imbalance signal has occurred a set number of times within a predetermined period.

FIG.I.

EP 0 252 693 A1

## EARTH LEAKAGE PROTECTIVE CIRCUIT

This invention relates to an earth leakage protective circuit designed to isolate a load circuit from an electrical supply on the occurrence of leakage of current from the load circuit to earth. In particular, the invention is concerned with an earth leakage protective circuit comprising a contact breaker intended to have its contacts in a supply line, a switching device connected with the coil of the contact breaker to provide, when operated, a path for current through the coil, and means for detecting earth leakage and for controlling the switching device to cause the contacts to open when earth leakage occurs, which has a sensing circuit for sensing an imbalance in current flow in the circuit to be protected to provide an imbalance output signal.

An aim of the present invention is to provide improved detection of earth leakage occurrence.

To that end the earth leakage protective circuit of the present invention has an error condition determining means connected to receive the imbalance output signal, and to produce an output control signal for operating the switching device when the the imbalance signal has occurred a set number of times within a predetermined period.

Preferably the error condition determining means includes means for converting a sensed imbalance current into an error pulse, and means for receiving any occurring error pulses and providing a signal to a comparator means. A number of error pulses are preferably required to trigger the comparator. The means receiving the error pulses can include a capacitor, or other charge storage means, which is charged by the error pulse(s). This arrangement provides a time delay, so that a number of error pulses will occur before the level of the imbalance output signal exceeds the reference signal to trigger the comparator and thereby the switching device.

The pulse producing circuit can advantageously be formed by means of a comparator receiving as input a reference voltage and the imbalance signal, and having a feedback arrangement producing a pulsed output in response to the detected imbalance signal exceeding the reference value.

A preferred embodiment of the invention will now be described by way of example and with reference to the accompanying drawings, wherein:

Figure 1 shows a diagram of a circuit for single phase supply, according to the embodiment of the invention,

Figure 2 shows graphic representations of detected fault levels and pulses produced by the circuit according to the embodiment of the invention, and

Figure 3 shows charging of an error charge holding capacitor with successive fault pulses.

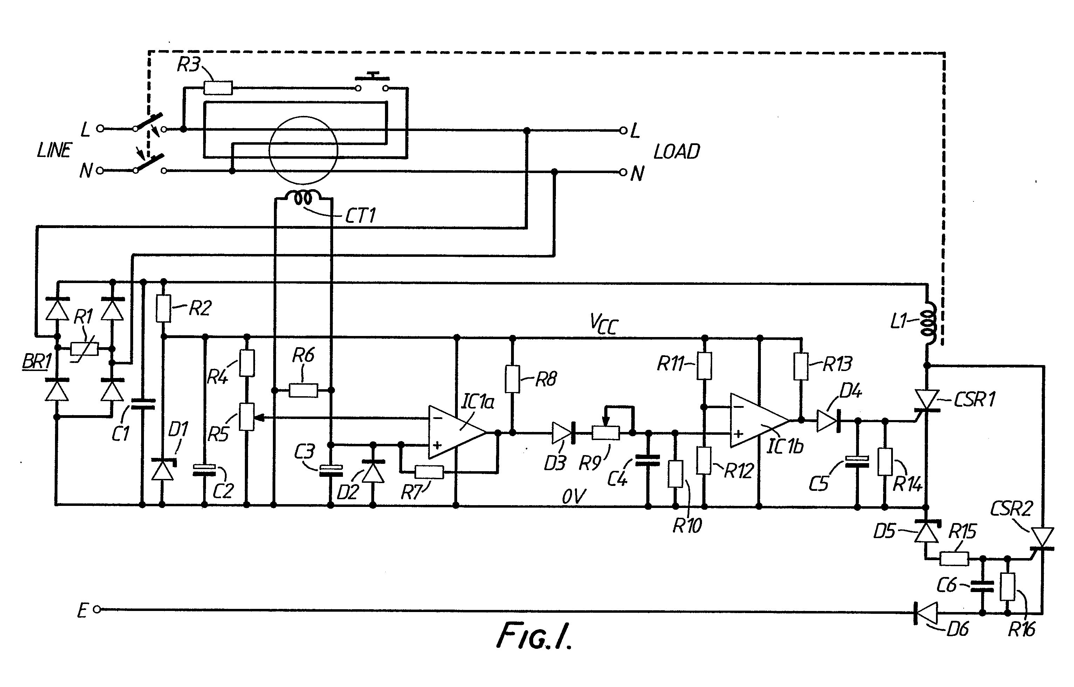

Referring to Figure 1, the supply circuit to be protected is represented by the live and neutral lines L and N which are connected at their left hand ends to the supply and at their right hand ends to the load. Earth leakage is detected by a current balance transformer CT1 surrounding both lines, and having no output when there is no leakage to earth and the currents in the lines are balanced. The output of the current balance transformer is applied by an electronic circuit to a switch, exemplified in the drawing as a thyristor CSR1 in series with the tripping coil L1 of a contact breaker having contacts CB in line L and line N. When there is earth leakage causing an imbalance of current between the supply lines, the output from transformer CT1 feeds the electronic circuit, switch CSR1 is opened, current passes through coil L1 and the contacts CB open to cut off the supply to the load.

Considering the circuit in detail a rectifier circuit BR1 is connected across lines L and N and supplies a potential smoothed by capacitor C1; the output of rectifier circuit BR1 is provided between lines +V and 0V, in normal operation line 0V is at earth potential. The secondary winding of current balance transformer CT1 is connected across resistor R6 and capacitor C3 and the voltage across those components is supplied to an integrated circuit operational amplifier (OP-AMP) IC1a. There is a diode D2 in parallel with the capacitor C3. The OP-AMP IC1a is supplied from line VCC derived from line +V by a circuit comprising resistor R2, diode D1 and capacitor C2. A voltage divider circuit comprising a resistor R4 and a variable resistor R5 is connected between the lines VCC and 0V, and the tapped-off output from variable resistor R5 is applied to the negative input of OP-AMP IC1a. A feedback resistor R7 is connected between the output of the OP-AMP IC1a and the positive input. A resistor R8 is connected between the output of the OP-AMP IC1a and the positive supply line VCC.

The output of OP-AMP IC1a is connected via a diode D3 and preset resistor R9 to one side of a capacitor C4 which has its other side connected to the supply line 0V. A resistor R10 is connected in parallel with the capacitor C4 and the positive side of the capacitor C4 is connected to the positive input of a second integrated circuit operational amplifier IC1b which, as the OP-AMP IC1a also derives its supply from lines VCC and 0V. There is a voltage divider formed by resistors R11 and R12 between the supply lines VCC and 0V and the negative input of the OP-AMP IC1b is connected to the junction of the two resistors to be provided with the divided voltage. An output of the OP-AMP IC1b is connected through a resistor R13 to the line VCC and through diode D4 to the gate of thyristor CSR1. The gate of thyristor CSR1 is also connected by capacitor C5 and R14 to the line 0V.

In addition to this described circuitry there is a loss of neutral detecting circuit comprising: thyristor CSR2, diodes D5 and D6 resistors R15 and R16 and capacitor C6, the operation of which is fully described in our European patent application EP-A-0154450, and will therefore not be described further in detail in this specification.

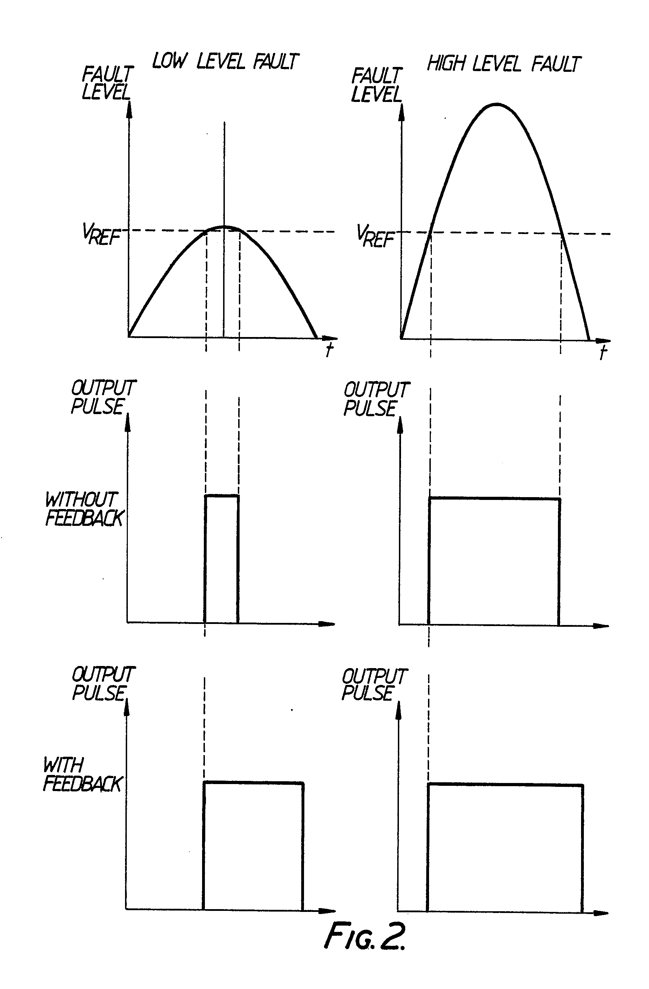

In normal operation under no earth leakage, the input voltage to comparator IC1a is zero, switch CSR1 remains open, and the contact breaker CB is not tripped. When earth leakage occurs, the imbalance voltage is detected by current transformer CT1 and the resulting voltage across R6 is applied to the positive terminal of the comparator constituted by OP-AMP IC1a. When the voltage at the positive input, i.e. the voltage across R6, exceeds the reference voltage derived from resistor R5, the output of the comparator IC1a goes positive. This is the start of the error detection pulse. The voltage from the output of comparator IC1a is fed back to its the positive input via resistor R7, so that even when the voltage across R6 has fallen to below the reference voltage from resistor R5, the voltage at the positive input remains higher than the reference voltage derived from R5. The output of the comparator IC1a is thus maintained at a high level to form a pulse output. The output of the comparator IC1a eventually goes low when the voltage across R6 falls sufficiently to offset the voltage fed back by resistor R7, thus driving the positive input to the comparator IC1a below the reference voltage provided by resistor R5. Examples of the formation of output pulses for various fault levels is shown in Figure 2 where, for comparison pulse formations which would occur without the feedback resistor R7 are also shown. It will be readily apparent that the provision of the feedback arrangement for the comparator IC1a provides pulses with duration less dependent upon fault level.

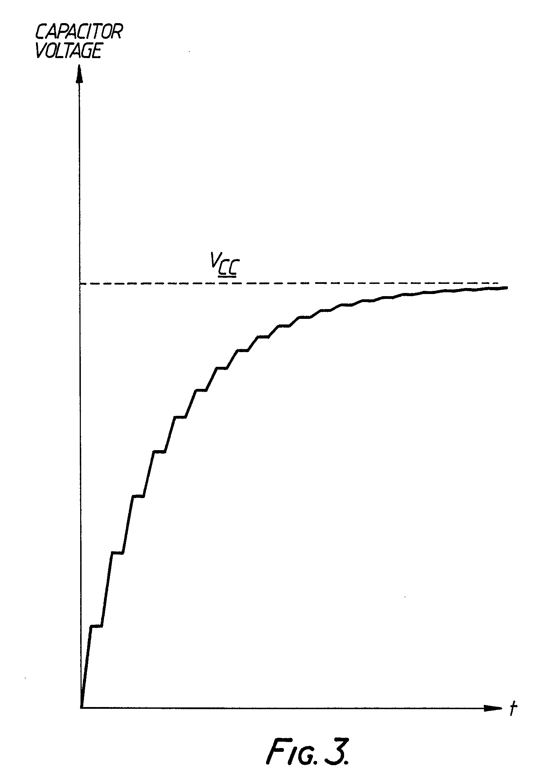

The output pulses from the comparator IC1a are provided through diode D3 and resistor R9 to charge the capacitor C4. When, by the application of a number of error pulses, the voltage across the capacitor C4 supplied to the positive input terminal of the second comparator IC1b exceeds the reference voltage derived from the resistor chain R11 and R12, the output of the comparator IC1b goes high triggering the thyristor CSR1 to open the circuit breaker CB. Figure 3 shows how the capacitor is charged by successive error pulses from the comparator IC1a. The diode D3 prevents discharging of the capacitor C4 during the negative pulse cycle when the output of the comparator IC1a goes low. The resistor R10 allows for the slow discharge of C4, so that the occurrence of an occasional error pulse over a long period of time will not lead to an inadvertent tripping of the circuit breaker. The value of the resistor R9 is set to approximately one tenth the value of R10 to allow for charging of the capacitor C4.

It will be appreciated that the response time of the circuit, given constant length output pulses from the comparator IC1a, is determined by RC values of R9/C4 and C4/R10.

This particular form of circuit can be advantageously used where a number of earth leakage protection circuits are protecting the same circuit, for example there may be a protective circuit on a main fuse board and also on a device operating from the fuse board. It is desirable that the circuit breaker on the device is released before, and in some circuits instead of, the circuit breaker on the fuse boards. By using the circuit of the described embodiment and selecting the values of R9, C4 and R10 appropriately the protective circuit of the fuse board could be arranged to have a longer delay time before being triggered than the protective circuit on the device. Thus, the protective circuit of the device and the protective circuit on the fuse boards would produce error pulses at the same rate but the capacitor C4 on the protective circuit for the device would be charged prior to the corresponding capacitor on the protective circuit on the fuse board. The circuit breaker on the device would thus be tripped before the circuit breaker on the fuse board. The protective circuit on the fuse board would then provide back-up in case for some reason the protective circuit on the device failed.

## Claims

1. An earth leakage protective circuit comprising a contact breaker (CB, L1) intended to have its contacts in a supply line, a switching device (CSR1) connected with the coil (L1) of the contact breaker (CB) to provide, when operated, a path for current through the coil (L1), and means (CT1, R4-R14, C3-C5, D2-D4, IC1a, and IC1b) for detecting earth leakage and for controlling the switching device to cause the contacts to open when earth leakage occurs, having a sensing circuit (CT1, R6) for sensing an imbalance in current flow in the circuit to be protected to provide an imbalance output signal, characterised in that there is an error condition determining means (R4, R5, R7-R14, C3-C5, D2-D4, IC1a, and IC1b) connected to receive the imbalance output signal, and to produce an output control signal for operating the switching device when the the imbalance signal has occurred a set number of times within a predetermined period.

2. An earth leakage protective circuit as claimed in claim 1, wherein the error condition determining means includes means (IC1a, R4, R5, R7, C3, D2) for converting a sensed imbalance current into an error pulse, and means (D3, R9, R10, C10) for receiving any occurring error pulses and providing a signal to a comparator means (IC1b, R11, R12).

3. An earth leakage protective circuit as claimed in claim 2, wherein a number of error pulses are preferably required to trigger the comparator (IC1b, R11, R12).

4. An earth leakage protective circuit as claimed in claim 3, wherein the means receiving the error pulses includes a capacitor (C4), or other charge storage means, which is charged by the error pulse(s), to provide a time delay, so that a number of error pulses will occur before the level of the imbalance output signal exceeds the reference signal to trigger the comparator (IC1b, R11, R12) and thereby the switching device (CSR1).

5. An earth leakage protective circuit as claimed in claim 2, 3 or 4, wherein the pulse producing circuit has a comparator (IC1a) connected to receive as one input a reference voltage (R4, R5) and as a second input the imbalance signal (CT1, R6), and having a feedback arrangement (R7) for producing a pulsed output in response to the detected imbalance signal exceeding the reference value.

FIG.I.

*Fig. 2.*

CAPACITOR
VOLTAGE

$V_{CC}$

$t$

FIG. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BE-A- 901 508 (GORHEZ)<br>* Figure 1; page 4, line 8 - page 6, line 8 * | 1-3 | H 02 H 3/33 |
| Y | --- | 4,5 | |
| Y | US-A-4 045 822 (SCHADE)<br>* Figure 1; claim 3 *<br>--- | 4,5 | |
| A | FR-A-2 036 941 (SAPAREL)<br>* Figure 4; page 5, lines 13-30 *<br>--- | 1-5 | |
| A | GB-A-2 006 555 (ELECTRICAL PROTECTION CO.)<br>* Whole document *<br>--- | 1-5 | |
| D,A | EP-A-0 154 450 (DELTA)<br><br>----- | | TECHNICAL FIELDS SEARCHED (Int. Cl.4)<br><br>H 02 H |

The present search report has been drawn up for all claims

| Place of search | Date of completion of the search | Examiner |
|---|---|---|
| THE HAGUE | 09-10-1987 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82